# EUROPÄISCHE PATENTANMELDUNG

(11) **EP 1 009 050 A2**
(43) Veröffentlichungstag der Anmeldung: **14.06.2000**
(21) Anmeldenummer: 99124617.4
(22) Anmeldetag: 10.12.1999
(51) Int. Cl.: H01M 8/00, H01M 8/04, B60L 11/18

(54) **Brennstoffzellensystem insbesondere für elektromotorisch angetriebene Fahrzeuge**

(30) Priorität: 12.12.1998 DE 19857398
(71) Anmelder: ADAM OPEL AG, 65423 Rüsselsheim (DE)
(72) Erfinder: Matejcek, Lothar, Dipl.-Ing., 55278 Mommenheim (DE); Wöhr, Martin, Dipl.-Ing., Pittsford, NY 14534 (US)
(74) Vertreter: Bergerin, Ralf, Dipl.-Ing.

(57) **Zusammenfassung**

Es wird ein System aus zwei Brennstoffzellenstacks vorgestellt, die unterschiedliche Arbeitstemperaturen aufweisen. Das System besteht aus einem NT-Stack (1), dessen Arbeitstemperatur typischerweise bei 80 °C liegt, und einem Hochtemperaturstack (2), dessen Arbeitstemperatur auf jeden Fall über 100 °C liegen soll. Die Prozeßgase werden zunächst im HT-Stack und dann dem NT-Stack zugeleitet, das Kühlmedium (Kühlluft) fließt zunächst zum NT-Stack und sodann zum HT-Stack.

Vorteil:

Der HT-Stack (2) liefert eine hohe elektrische Leistung und ist relativ einfach zu betreiben. Sein Nachteil ist, daß die volle Leistung erst nach einer langen Aufwärmphase erzeugt wird. In dieser Phase liefert der NT-Stack (1) schon elektrische Leistung. Außerdem läßt sich durch geschickte Steuerung der Entnahme der elektrischen Leistung des NT-Stacks ein stabil arbeitendes System realisieren.

## Beschreibung

Die Erfindung bezieht sich auf ein Brennstoffzellensystem insbesondere für elektromotorisch angetriebene Fahrzeuge.

### Stand der Technik:

Je nach Art des eingesetzten Elektrolyten unterscheidet man bei Brennstoffzellen unterschiedliche Typen. Für den mobilen Einsatzbereich, d. h. für die Erzeugung elektrischer Leistung für elektromotorisch angetriebene Fahrzeuge, haben sich Brennstoffzellen mit protonenleitenden Membranen bewährt, deren Arbeitstemperatur typischerweise bei 60 - 80 °C liegt. Es sind allerdings auch schon Membranen für Brennstoffzellen vorgestellt worden, die sowohl bei Raumtemperatur (EP 0 827 228 A1), als auch bei Temperaturen zwischen 100 und 200 °C stabil arbeiten. Eine solche Membran wird in der US-PS 5 716 727 beschrieben.

Bisher vorgestellte Fahrzeuge mit Brennstoffzellen weisen Brennstoffzellenaggregate mit einer Leistung von etwa 20 bis 50 kW auf. Ein maßgebliches Handikap besteht zur Zeit aber noch darin, daß ein zu großer Zeitraum verstreicht, bis der Stack nach der Inbetriebnahme des Fahrzeugs seine Arbeitstemperatur erreicht hat, bei der er seine volle Leistung abgeben kann. Dieses Problem verschärft sich, wenn Brennstoffzellen mit höheren Arbeitstemperaturen zum Einsatz kommen. Es ist nämlich zu erwarten, daß bei diesen Brennstoffzellen der Zeitverzug noch größer ist.

Außerdem ist ein weiteres Problem zu beachten, das z. B. auch beim Betrieb von oxidkeramischen Brennstoffzellen (SOFC: Solid Oxid Fuel Cell) auftritt und in der DE 196 11 591 A1 exemplarisch beschrieben ist: Die Temperaturspreizung, das ist die Differenz zwischen der Gasaustrittstemperatur und der Gaseintrittstemperatur darf nicht zu groß werden, da ansonsten das Material der Brennstoffzelle zu stark belastet wird und inhomogene Reaktionsverteilungen auftreten. Es ist daher notwendig, sowohl die Prozeßgase, als auch die Kühlgase bzw. die Kühlluft vor Eintritt in den Stack annähernd auf dessen Arbeitstemperatur zu bringen. In der DE 196 11 591 A1 wird daher vorgeschlagen, zwei oxidkeramische Brennstoffzellen etwas unterschiedlicher Bauart (die eine besitzt eine metallische und die andere eine keramische Bipolarplatte) hintereinander zu schalten, wobei die Prozeßgase und die Kühlluft zunächst in die Brennstoffzelle mit der niedrigeren (800 °C) und sodann in die Brennstoffzelle mit der höheren Arbeitstemperatur (1000 °C) eintreten.

### Das zu lösende Problem:

Mit der Erfindung soll erreicht werden, daß ein Stromerzeugungssystem auf Brennstoffzellenbasis zur Verfügung steht, das relativ schnell seine Arbeitstemperatur erreicht und schon in der Aufwärmphase möglichst hohe Leistungen zur Verfügung stellt. Außerdem soll die Dauer der Aufwärmphase möglichst klein sein. Dies soll bei einer möglichst kleinen Temperaturspreizung erzielt werden.

### Erfindung:

Es wird daher ein Brennstoffzellensystem vorgeschlagen, das aus zwei Brennstoffzellenstacks mit unterschiedlichen Arbeitstemperaturen besteht, nämlich aus einem Niedertemperaturstack (NT-Stack) und einem Hochtemperaturstack (HT-Stack), wobei prozeßtechnisch der Hochtemperaturstack dem Niedertemperaturstack vorgeschaltet ist.

Dies bedeutet, daß die Prozeßgase, im allgemeinen Wasserstoff als Brennstoff an der Anode und Sauerstoff als Oxidand an der Kathode, zunächst dem HT-Stack zugeführt werden, wobei die nach der chemischen Reaktion im HT-Stack übriggebliebene Wasserstoff- und Sauerstoffanteile über ein Leitungssystem an die Eingangsseite des NT-Stacks geführt werden. Das Kühlmedium hingegen durchläuft in einem Kreislauf zunächst den NT-Stack und sodann den HT-Stack. Dies bedeutet, daß die Abwärme des NT-Stacks zum Aufwärmen des HT-Stacks genutzt wird. Es sei an dieser Stelle angemerkt, daß unter einem Stack normalerweise ein kompaktes Gebilde aus mehreren Membran-Elektroden-Einheiten und Bipolarplatten, die von zwei Endplatten zusammengehalten werden, verstanden wird. In dieser Anmeldung soll der Begriff "Stack" aber auch Aggregate bezeichnen, die aus mehreren Stacks zusammengesetzt sind.

Diese Anordnung hat zur Folge, daß ausgehend von der Inbetriebnahme eines kalten Systems, d. h. eines Systems das sich auf Umgebungstemperatur befindet, der Brennstoff und die Prozeßluft wegen der niedrigen Temperatur im HT-Stack zunächst kaum chemisch an den Elektroden reagieren. Dies ist insbesondere darauf zurückzuführen, daß die Membran bei tiefen Temperaturen nur eine geringe Ionenleitfähigkeit aufweist. Der Brennstoff und die Prozeßluft gelangen nahezu unverbraucht in den NT-Stack, wo sie unter Bildung von Reaktionswärme zum Teil chemisch reagieren. Die so gewonnene Wärmeenergie dient zunächst der Aufheizung des NT-Stacks und wird anschließend mit einem Kühlmedium zum HT-Stack geleitet, dessen rasche Aufwärmung damit gewährleistet ist. Die steigende Temperatur im HT-Stack bewirkt, daß dort die chemischen Reaktionen eingeleitet werden und dieser Stack zur Erzeugung von elektrischer Leistung beiträgt.

Die Arbeitstemperaturen liegen für den NT-Stack typischerweise unter 100 °C, also bei etwa 60 - 80 °C, und die des HT-Stacks bei über 100 °C, vorzugsweise bei 150 °C, wobei eine praktische Obergrenze bei ca. 200 °C bestehen dürfte.

Denkbar wäre es allerdings auch, die Temperaturskala insgesamt zu verschieben, d. h. den NT-Stack bei Umgebungstemperatur zu betreiben und im HT-Stack eine Temperatur von etwa ca. 60 - 80 °C vorzusehen. Entscheidend ist aber in beiden Fällen, daß die Temperatur im HT-Stack mit Hilfe der im NT-Stack erzeugten Wärme schneller auf den Arbeitspunkt gebracht werden kann, so daß die vom HT-Stack erzeugte Leistung schneller zur Verfügung steht, und daß in der Aufwärmphase schon ausreichend elektrische Energie im NT-Stack erzeugt wird.

Um Wärme aus dem Prozeß, z. B. für den Betrieb eines Reformers, auskoppeln zu können und um in die interne Rückkopplung zwischen den Stacks eingreifen zu können, wird vorgeschlagen zwischen dem HT-Stack und dem NT-Stack einen Kühler sowohl für den Brennstoff, als auch für die Prozeßluft einzusetzen. Dies hat insbesondere den Vorteil, daß die Abgase des HT-Stacks auf die Arbeitstemperatur des NT-Stacks gebracht werden können, so daß die Temperaturspreizung für diesen Stack möglichst gering bleibt. Die vom Kühler aufgenommene Wärme kann auch dazu dienen, Brennstoff und Prozeßluft vor dem Eintritt in den HT-Stack aufzuwärmen und auch für diesen Stack eine möglichst geringe Temperaturspreizung zu erreichen.

Des weiteren kann am Prozeßlufteingang des NT-Stacks eine Zumischung von Frischluft erfolgen. Auf diese Weise kann die Sauerstoffzufuhr erhöht und gleichzeitig die Prozeßluft ausreichend gekühlt werden. Gegebenenfalls kann in diesem Fall auf einen Kühler verzichtet werden.

Wird das System weiterhin mit einem Regler versehen, der die dem NT-Stack entnommene elektrische Leistung regelt, ergibt sich die Möglichkeit, die Betriebsbedingungen des HT-Stacks zu beeinflussen. So kann z. B. durch eine Reduzierung der elektrischen Leistung des NT-Stacks dessen Wärmeproduktion reduziert werden, was eine kühlende Wirkung auf den HT-Stack ausübt. Des weiteren kann über die Regelung der Entnahme der elektrischen Leistung der Wasserhaushalt des Gesamtsystems kontrolliert werden. Wenn nämlich die Leistungsentnahme am NT-Stack reduziert wird, sinkt dessen Temperatur, so daß der vom HT-Stack kommende Wasserdampf dort auskondensieren kann. Die Leistungsentnahme bestimmt somit die im NT-Stack erzeugte Menge flüssigen Wassers, die mittels eines Kondensatabscheiders am Ausgang des NT-Stacks zurückgewonnen werden kann.

Umgekehrt kann der HT-Stack als CO-Reiniger dienen. Es ist davon auszugehen, daß der bei Temperaturen deutlich über 100 °C betriebene HT-Stack weniger empfindlich ist gegenüber CO-Verunreinigungen des Brennstoffes als Brennstoffzellen der heutigen Bauart mit einer Betriebstemperatur von ca. 60 - 80 °C. D. h. der dem HT-Stack zugeführte Brennstoff braucht nicht aufwendig CO-gereinigt zu sein. Durch Zuführung von Luft in dem Brennstoffpfad des HT-Stacks erfolgt eine partielle Oxidation des vorhandenen CO zu Kohlendioxid, so daß der HT-Stack als CO-Reinigungsstufe für den NT-Stack agiert.

Im folgenden wird die Erfindung anhand einer schematischen Darstellung in einer Figur erläutert.

Das Brennstoffzellensystem besteht aus einem NT-Stack 1 und einem HT-Stack 2. Vorzugsweise handelt es sich dabei um Brennstoffzellen vom Membrantyp, also Brennstoffzellen mit einer Polymermembran, der als Brennstoff an der Anode Wasserstoff und als Oxidand an der Kathode Sauerstoff bzw. Luftsauerstoff zugeführt wird. Typischerweise besteht jeder Stack aus mehreren Zellen, um die nötige Gesamtspannung zu erzielen. Die beiden Stacks unterscheiden sich nur in der jeweiligen Arbeitstemperatur, die wie oben erläutert im wesentlichen von der besonderen Art der eingesetzten Membran bestimmt wird. Die beiden Stacks sind prozeßtechnisch hintereinander geschaltet, was bedeutet, daß der Brennstoff und die Prozeßluft zunächst dem HT-Stack 2 zugeführt werden. Dort wird der Brennstoff bzw. die Prozeßluft zum Teil verbraucht. Die Abgase, die noch nicht verbrannten Wasserstoff bzw. noch nicht oxidierten Sauerstoff enthalten, werden dem NT-Stack 1 über ein Leitungssystem 3, 3' zugeführt.

Beide Stacks sind luftgekühlt, wobei die Kühlluft zunächst am bzw. durch den NT-Stack 1 geführt wird und die aufgewärmte Luft sodann zum HT-Stack 2. Es findet somit ein Wärmeübertrag vom NT-Stack 1 zum HT-Stack 2 statt. Dies soll durch die die Strömungsrichtung der Kühlluft wiedergebenden Pfeile 4 angedeutet werden.

In die Verbindungsleitung 3, 3' ist ein Kühler 5 eingesetzt, der sowohl den Brennstoff als auch die Prozeßluft kühlt und deren Temperatur soweit wie möglich auf die Arbeitstemperatur des NT-Stack 1 bringt. Die dabei entnommene Wärme kann wie üblich dazu genutzt werden, den Brennstoff und die Prozeßluft an der Eingangsseite des HT-Stacks 2 vorzuwärmen.

An der Abgasseite des NT-Stacks 1 befindet sich im Prozeßluftkanal ein Kondensatabscheider 6, um das in der Abluft vorhandene flüssige Wasser abzuscheiden. Das so gewonnene flüssige Wasser wird wieder in das Gesamtsystem eingeführt.

Die Kühlung zumindest der in den NT-Stack 1 eintretenden Prozeßluft kann auch durch eine Zumischung von Frischluft erfolgen. Dazu wird an die Prozeßluftleitung 3' ein Mischventil 7 angeschlossen, mit dessen Hilfe frische Umgebungsluft in den Prozeßluftpfad des NT-Stacks 1 eindosiert werden kann.

Dieses System aus zwei Brennstoffzellenstacks kann nun unter verschiedenen Gesichtspunkten betrieben werden. So kann z. B. der NT-Stack 1 in extremen Situationen z. B. bei hohen Umgebungstemperaturen als zusätzlicher Kühler für den HT-Stack eingesetzt werden, indem die Entnahme von elektrischer Energie reduziert wird. Damit wird die Kühlluft am NT-Stack 1 weniger aufgeheizt, so daß der HT-Stack 2 stärker gekühlt werden kann. Um dies zu realisieren, ist ein Regler 8 in Stromkreis des NT-Stacks 1 vorgesehen, der mit einem Temperatursensor 9 am HT-Stack gekoppelt ist. Dies ermöglicht es, die Temperatur des HT-Stacks durch Regelung der elektrischem Leistung des NT-Stacks zu kontrollieren.

Auf diese Weise läßt sich auch die Betriebstemperatur des NT-Stacks einstellen und damit die auskondensierbare Menge der Flüssigkeit im Abgasstrom des NT-Stacks steuern. Dadurch läßt sich ein ansonsten benötigter Kondensator im Abluftstrom einsparen oder kleiner dimensionieren. Diese Flüssigkeit wird benötigt, um einen im System integrierten Reformer (nicht in der Fig. dargestellt) betreiben zu können. Durch geschickte Wahl der Energieentnahme kann das System wasserneutral betrieben werden, d. h. das vom Reformer benötigte Wasser wird ausschließlich vom Kondensatabscheider 6 geliefert.

Falls der Brennstoff im Fahrzeug mittels eines Reformers erzeugt wird, enthält der Brennstoff nicht nur Wasserstoff, sondern auch einen beträchtlichen Teile Kohlenmonoxid. Von einer Membran-Elektroden-Einheit mit einer Hochtemperatur-Polymermembran ist zu erwarten, daß diese im Gegensatz zu einer solchen mit einer Niedertemperatur-Polymermembran gegen Kohlenmonoxid unempfindlich ist. Durch Zuleitung von Luft in den Brennstoffkanal mittels eines Mischventils 10 kann im HT-Stack eine partielle Oxidation von CO₂ zu Kohlendioxid bewirkt werden, so daß der dem NT-Stack zugeführte Brennstoff CO-reduziert ist.

Weiter ist zu erwarten, daß die Membran des HT-Stacks 2 eher trocken als feucht betrieben werden kann, so daß die Prozeßluft relativ trocken zugeführt werden kann. Diese wird im HT-Stack durch das dort durch die chemische Reaktion entstehende Wasser angefeuchtet, so daß die austretende Prozeßluft einen ausreichenden Feuchtigkeitsgrad für einen sicheren Betrieb des NT-Stacks 1 aufweist.

Entscheidend ist aber, daß dem Vorteil des HT-Stacks, nämlich hohe Leistungsabgabe, Unempfindlichkeit gegenüber Kohlenmonoxid im Brennstoff und Betrieb mit einer relativ trockenen Prozeßluft der Nachteil gegenübersteht, daß dieser Stack eine relativ lange Zeit benötigt, bis die optimale Betriebstemperatur erreicht ist, bei der die volle Leistung abgegeben werden kann. Dieser Zeitraum wird überbrückt durch die Leistungsabgabe des NT-Stacks 1, der aufgrund seiner niedrigeren Arbeitstemperatur relativ rasch seinen Arbeitspunkt erreicht.

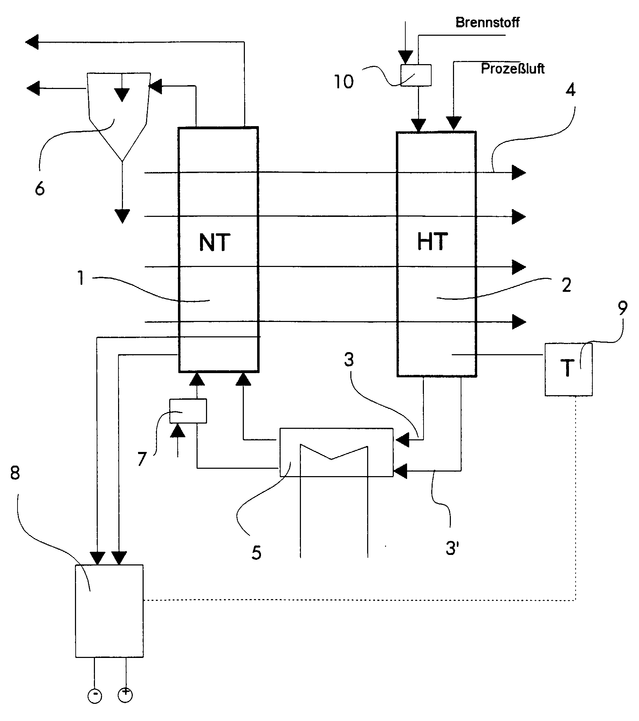

## Patentansprüche

1. Brennstoffzellensystem insbesondere für elektromotorisch getriebene Fahrzeuge, das aus zwei Brennstoffzellenstacks mit unterschiedlichen Arbeitstemperaturen, nämlich aus einem Niedertemperaturstack und einem Hochtemperaturstack besteht, **dadurch gekennzeichnet**, daß prozeßtechnisch der Hochtemperaturstack (2) dem Niedertemperaturstack (1) vorgeschaltet ist.

2. Brennstoffzellensystem nach Anspruch 1, **dadurch gekennzeichnet**, daß beide Stacks (1, 2) an einem gemeinsamen Kühlkreislauf angeschlossen sind, wobei das Kühlmedium zunächst den Niedertemperaturstack (1) und anschließend den Hochtemperaturstack (2) durch- bzw. umströmt.

3. Brennstoffzellensystem nach Anspruch 1 oder 2, **dadurch gekennzeichnet**, daß die Arbeitstemperatur des Niedertemperaturstacks (1) unter 100 °C liegt, vorzugsweise etwa 60 - 80 °C beträgt, und die des Hochtemperaturstacks über 100 °C beträgt, vorzugsweise bei etwa 150 °C liegt.

4. Brennstoffzellensystem nach einem der vorhergehenden Ansprüche, **dadurch gekennzeichnet**, daß die Stacks (1, 2) über Verbindungsleitungen (3, 3') miteinander verbunden sind und daß in diese Leitungen ein Kühler (5) eingesetzt ist.

5. Brennstoffzellensystem nach einem der vorhergehenden Ansprüche, **dadurch gekennzeichnet**, daß die Entnahme der elektrischen Leistung des Niedertemperaturstacks (1) regelbar ist.

6. Brennstoffzellensystem nach Anspruch 5, **dadurch gekennzeichnet**, daß am Hochtemperaturstack (2) ein Temperatursensor (9) zur Erfassung der Temperatur des Hochtemperaturstacks (2) vorgesehen ist, und daß bei der Regelung der Entnahme der elektrischen Leistung des Niedertemperaturstacks (1) das Temperatursensorsignal Berücksichtigung findet.

7. Brennstoffzellensystem nach einem der vorhergehenden Ansprüche, **dadurch gekennzeichnet**, daß die Verbindungsleitung (3') zum Anodeneingang des Niedertemperaturstacks (1) mit einem Frischluftanschluß (7) versehen ist.

8. Brennstoffzellensystem nach einem der vorhergehenden Ansprüche, **dadurch gekennzeichnet**, daß dem Brennstoffpfad des Hochtemperaturstacks (2) Frischluft über ein Mischventil (10) zuführbar ist, um das im Brennstoff vorhandene Kohlenmonoxid im Hochtemperaturstack (2) zu Kohlendioxid oxidieren zu können.

9. Brennstoffzellensystem nach einem der vorhergehenden Ansprüche, **dadurch gekennzeichnet**, daß am Kathodenausgang des Niedertemperaturstacks (1) ein Kondensatabscheider (6) vorgesehen ist.
